# FASCICULE DE BREVET EUROPEEN

(11) **EP 4 641 715 B1**
(45) Date de publication et mention de la délivrance du brevet: **10.06.2026**
(21) Numéro de dépôt: 25167898.3
(22) Date de dépôt: 02.04.2025
(51) Int. Cl.: H01M 8/04082, H01M 8/04014, H01M 8/04029, H01M 8/04007, H01M 8/04119, H01M 8/0662, H01M 8/04089, H01M 8/04701, H01M 8/04828, B64D 27/355, B64D 33/08

(54) **MODULE D'ALIMENTATION EN AIR POUR UN SYSTÈME DE PILES À COMBUSTIBLE POUR AÉRONEF**
LUFTZUFUHRMODUL FÜR EIN BRENNSTOFFZELLENSYSTEM FÜR EIN FLUGZEUG
AIR SUPPLY MODULE FOR AN AIRCRAFT FUEL CELL SYSTEM

(30) Priorité: 25.04.2024 FR 2404296
(43) Date de publication de la demande: 29.10.2025
(73) Titulaire: Airbus SAS, 31700 Blagnac (FR); AIRBUS OPERATIONS (S.A.S.), 31060 Toulouse (FR)
(72) Inventeur: ALVAREZ, Franck, 31060 TOULOUSE (FR); BAMMER, Benedikt, 82024 TAUFKIRCHEN (DE)
(74) Mandataire: Airbus-OPS SAS

(56) Documents cités:
- WO-A2-2013/164572
- CN-A- 117 423 858
- US-A1- 2005 262 818

## Description

### DOMAINE TECHNIQUE

La présente invention concerne un module d'alimentation en air pour un système de production d'énergie électrique par pile à combustible utilisant de l'hydrogène ainsi qu'un système de production d'énergie électrique mettant en œuvre un tel module. L'invention concerne également un système de propulsion alimenté en électricité par un tel système de production d'énergie et un aéronef comportant un tel système de propulsion.

### ÉTAT DE LA TECHNIQUE ANTÉRIEURE

Afin de réduire la pollution engendrée par l'utilisation de kérosène lors de l'utilisation d'un aéronef, il se développe des aéronefs dont les moteurs sont alimentés en dihydrogène. Plus particulièrement, le dihydrogène est utilisé pour alimenter une pile à combustible afin de générer un courant électrique qui va à son tour faire tourner le moteur de l'aéronef. Afin de simplifier la compréhension de la description, on considère qu'une pile à combustible peut comporter une pluralité de piles à combustible. La génération du courant électrique nécessite une réaction chimique du dihydrogène avec du dioxygène. Le dioxygène est présent dans l'air et il est donc nécessaire que la pile à combustible soit alimentée en air pour que cette réaction ait lieu. Pour ce faire, un système classique de production d'énergie électrique comportant une pile à combustible comporte un système d'alimentation en air. Le flux d'air fourni par le système d'alimentation en air doit toutefois présenter une qualité, une température et un taux d'humidité spécifiques pour ne pas endommager la membrane de la pile à combustible, notamment. Or, ces exigences sont relativement difficiles à garantir dans un aéronef puisque les conditions environnementales d'un avion varient régulièrement (en cours de vol ou lors de son stationnement à terre). au cours de la journée. Notamment, les variations d'altitudes et de températures, les types de pollutions de l'air (comme les particules du type sable, poussière, etc.) ou la présence de certains gaz (comme l'ozone, le soufre SO2, le H2S, le NOx, ou le NH3) peuvent dégrader ou endommager la pile à combustible.

Par conséquent, pour garantir une longue durée de vie à l'ensemble du système, plusieurs composants sont nécessaires dans le système d'alimentation en air (par exemple, des filtres, un refroidisseur intermédiaire, un échangeur de chaleur, etc.). Ces composants sont généralement assemblés entre eux par des tuyaux et des connexions.

Un inconvénient de cette solution réside dans le fait que ces composants du système d'alimentation en air ainsi que les tuyauteries intermédiaires et leurs connexions représentent un volume et un poids non négligeables. En outre, ces composants comportent généralement chacun leur carter, ce qui rend leur accès et leur remplacement relativement difficiles lors des opérations de maintenance et/ou d'entretien, notamment du fait qu'ils peuvent être disposés à proximité de la pile à combustible.

Il existe donc un besoin de fournir un système d'alimentation en air qui soit moins encombrant et plus léger dont les opérations de maintenance sont facilitées.

Les documents US2005/262818A1, CN117423858A et WO2013/164572A2 décrivent des solutions d'alimentation en air de piles à combustible selon l'art antérieur.

### EXPOSÉ DE L'INVENTION

Un objet de la présente invention est de proposer un module d'alimentation en air pour un système de production d'énergie électrique comportant une pile à combustible qui soit léger et compact et qui soit facile à intégrer dans un système de production d'énergie électrique.

À cet effet, est proposé un module d'alimentation en air pour un système de production d'énergie électrique comportant une pile à combustible, ledit module comportant un boîtier qui comporte un orifice d'entrée et un orifice de sortie et dans lequel s'écoule un flux d'air entre ledit orifice d'entrée et ledit orifice de sortie selon une direction d'écoulement.

Selon l'invention, le module comporte, logés dans le boîtier, entre ledit orifice d'entrée et ledit orifice de sortie, un premier filtre comportant une première entrée et une première sortie dudit flux d'air et un premier échangeur thermique comportant une deuxième entrée et une deuxième sortie dudit flux d'air, ledit premier échangeur thermique étant disposé en aval du premier filtre par rapport à la direction d'écoulement. Plus précisément, ladite première sortie dudit premier filtre et ladite deuxième entrée dudit premier échangeur thermique sont en communication fluidique directement l'une avec l'autre, sans tuyau de raccordement connecté entre elles.

La mise en œuvre d'un tel module d'alimentation en air permet de diminuer le volume (et donc l'encombrement) du circuit d'alimentation et de distribution en air de la pile à combustible, ce qui facilite ainsi l'intégration du module au sein d'un système de production d'énergie électrique. En effet, le fait de s'affranchir de l'utilisation de tuyaux de raccordement entre le premier filtre et le premier échangeur thermique, notamment, permet un gain de volume relativement important. De plus un tel module permet aussi un gain significatif de poids, ce qui est relativement avantageux lorsque le module doit être embarqué dans un aéronef.

Ledit module comporte en outre, logés dans le boîtier, entre ledit orifice d'entrée et ledit orifice de sortie :
- un deuxième échangeur thermique comportant une troisième entrée et une troisième sortie dudit flux d'air, ledit deuxième échangeur thermique étant disposé en aval du premier échangeur thermique, et
- un deuxième filtre comportant une quatrième entrée et une quatrième sortie dudit flux d'air, ledit deuxième filtre étant disposé en aval du deuxième échangeur thermique.

Ladite deuxième sortie dudit premier échangeur thermique et ladite troisième entrée dudit deuxième échangeur thermique sont en communication fluidique directement l'une avec l'autre, sans tuyau de raccordement connecté entre elles. Ladite troisième sortie dudit deuxième échangeur thermique et ladite quatrième entrée dudit deuxième filtre sont en communication fluidique directement l'une avec l'autre, sans tuyau de raccordement connecté entre elles.

Selon un aspect particulier, ledit module comporte en outre, logé dans le boîtier, entre ledit orifice d'entrée et ledit orifice de sortie, un humidificateur comportant une cinquième entrée et une cinquième sortie dudit flux d'air, ledit humidificateur étant disposé en aval du deuxième filtre. En particulier, ladite cinquième entrée dudit humidificateur et ladite quatrième sortie dudit deuxième filtre sont en communication fluidique directement l'une avec l'autre. Ladite cinquième sortie dudit humidificateur et ledit orifice de sortie dudit module sont en communication fluidique directement l'un avec l'autre.

Selon un mode de réalisation particulier, ledit boîtier comporte des parois internes qui forment un canal d'écoulement dudit flux d'air entre ledit orifice d'entrée et ledit orifice de sortie. Lesdites parois internes mettent en communication fluidique directe la première sortie du premier filtre à la deuxième entrée du premier échangeur thermique, et/ou la deuxième sortie du premier échangeur thermique à la troisième entrée du deuxième échangeur thermique, et/ou la troisième sortie du deuxième échangeur thermique à la quatrième entrée du deuxième filtre, et/ou la quatrième sortie du deuxième filtre à la cinquième entrée de l'humidificateur.

Selon un aspect particulier de l'invention, le module comporte un circuit de dérivation comportant une sixième entrée et une sixième sortie d'un flux de dérivation, ledit circuit de dérivation étant disposé entre ledit orifice d'entrée et un orifice de sortie additionnelle dudit boîtier. Ledit orifice d'entrée et ladite sixième entrée sont en communication fluidique directement l'un avec l'autre et ladite sixième sortie et ledit orifice de sortie additionnelle du boîtier sont en communication fluidique directement l'un avec l'autre.

Selon un autre aspect particulier, le module comporte un circuit de recirculation comportant une septième entrée et une septième sortie d'un flux de recirculation, ledit circuit de recirculation étant disposé entre un orifice d'entrée d'air additionnelle dudit boîtier destiné à être relié à une source d'air de recirculation et une première entrée additionnelle dudit premier échangeur thermique. Ladite septième entrée et ledit orifice d'entrée additionnelle sont en communication fluidique directement l'un avec l'autre et ladite septième sortie et ladite première entrée additionnelle dudit premier échangeur thermique sont en communication fluidique directement l'une avec l'autre.

Selon encore un autre aspect particulier, ledit circuit de recirculation comporte en outre un séparateur d'eau comportant une huitième entrée et une huitième sortie dudit flux de recirculation, ledit séparateur d'eau étant disposé entre ledit premier échangeur thermique et ledit humidificateur. Ledit orifice d'entrée additionnel et une deuxième entrée additionnelle de l'humidificateur sont en communication fluidique directement l'un avec l'autre et une deuxième sortie additionnelle dudit humidificateur et ladite huitième entrée dudit séparateur d'eau sont en communication fluidique directement l'une avec l'autre de sorte que ledit flux de recirculation circule dudit orifice d'entrée additionnelle audit séparateur d'eau en traversant ledit humidificateur. Ladite huitième sortie dudit séparateur d'eau et ladite première entrée additionnelle dudit premier échangeur thermique sont en communication fluidique directement l'une avec l'autre.

Selon un autre aspect particulier, ledit circuit de recirculation comporte en outre un canal de contournement disposé entre ledit orifice d'entrée additionnelle dudit boîtier et ladite huitième entrée dudit séparateur d'eau, ladite huitième entrée dudit séparateur d'eau et ledit orifice d'entrée additionnelle étant en communication fluidique directement l'un avec l'autre via ledit canal de contournement de sorte que ledit flux de recirculation circule dudit orifice d'entrée additionnelle audit séparateur d'eau en contournant ledit humidificateur.

Selon un premier mode de réalisation, ledit circuit de dérivation et/ou ledit circuit de recirculation est monté à l'extérieur dudit module.

Selon un deuxième mode de réalisation, ledit circuit de dérivation et/ou ledit circuit de recirculation est formé par des parois internes dudit module.

Selon un aspect particulier de l'invention, ledit premier filtre et/ou ledit deuxième filtre se présente sous la forme d'une cartouche amovible dudit boîtier.

Selon un autre aspect particulier, ledit premier filtre combine un filtre à particules d'ozone et un convertisseur de composés organiques volatiles, ledit premier échangeur thermique est du type air/air, ledit deuxième échangeur thermique est du type liquide/air et ledit deuxième filtre est un filtre chimique adsorbant.

L'invention concerne également un système de production d'énergie électrique comportant au moins une pile à combustible et au moins un module d'alimentation en air tel que décrit précédemment et un système de propulsion électrique alimenté en électricité par au moins un tel système de production d'énergie électrique.

L'invention concerne aussi un aéronef comportant au moins un système de propulsion tel que décrit précédemment.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation et de ses variantes, ladite description étant faite en relation avec les dessins joints, parmi lesquels :
La figure 1 est une vue de dessus d'un aéronef selon l'invention ;
La figure 2 est une vue en perspective d'un exemple de module d'alimentation en air selon l'invention ;
La figure 3 est une autre vue en perspective du module de la figure 2 ;
La figure 4a est une vue schématique d'un module d'alimentation en air selon un premier mode de réalisation de l'invention ;
La figure 4b illustre les flux au sein du module de la figure 4a.
La figure 5a est une vue schématique et en coupe d'un module d'alimentation en air selon un deuxième mode de réalisation de l'invention :
   La figure 5b illustre les flux au sein du module de la figure 5a ;
   La figure 6a] est une vue schématique et en coupe d'un module d'alimentation en air selon une variante du deuxième mode de réalisation de l'invention ; et
   La figure 6b illustre les flux au sein du module de la figure 6a.

### EXPOSÉ DÉTAILLÉ D'UN EXEMPLE DE RÉALISATION

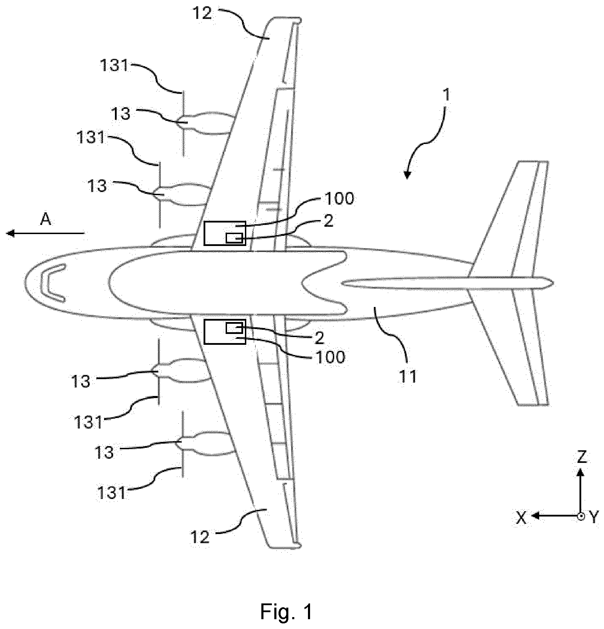

La figure 1 montre un aéronef 1 qui présente un fuselage 11 de part et d'autre duquel est fixée une aile 12. Sous chaque aile 12 est fixé au moins un système de propulsion 13.

Par convention, on appelle X la direction longitudinale de l'aéronef 1, Y la direction transversale de l'aéronef 1 qui est horizontale lorsque l'aéronef 1 est au sol, et Z la direction verticale ou hauteur verticale lorsque l'aéronef 1 est au sol, ces trois directions X, Y et Z étant orthogonales entre elles.

D'autre part, les termes " avant " et " arrière " sont à considérer par rapport à une direction d'avancement de l'aéronef 1 lors du fonctionnement des systèmes de propulsion 13, cette direction étant représentée schématiquement par la flèche A.

Dans le mode de réalisation de l'invention présenté ici, le système de propulsion 13 peut prendre la forme d'un moteur électrique comportant une hélice 131 montée sur l'arbre moteur du moteur électrique qui est alimenté en électricité par une pile à combustible. La pile à combustible est ici alimentée en oxygène et en dihydrogène afin de produire de l'électricité.

L'aéronef 1 comporte en outre au moins un système 100 de production d'énergie électrique destiné à alimenter les systèmes de propulsion 13 de l'aéronef 1. Sur la figure 1, le système 100 est disposé dans les ailes 12 mais on comprend aisément que le système 2 pourrait aussi être localisé dans la nacelle du moteur, ou dans une autre partie de l'avion, comme le fuselage 11. Le système 100 de production d'énergie électrique comporte une pile à combustible utilisant du dihydrogène comme combustible. Classiquement, le système 100 de production d'énergie électrique comporte donc un circuit d'alimentation et de distribution de dihydrogène (de préférence sous forme gazeuse) à la pile à combustible et un circuit d'alimentation et de distribution d'air (de préférence du dioxygène) à la pile à combustible. Le dihydrogène et l'air permettent à la pile à combustible de créer de l'énergie électrique grâce à la réaction chimique d'oxydoréduction qui a lieu entre l'anode et la cathode de la pile à combustible.

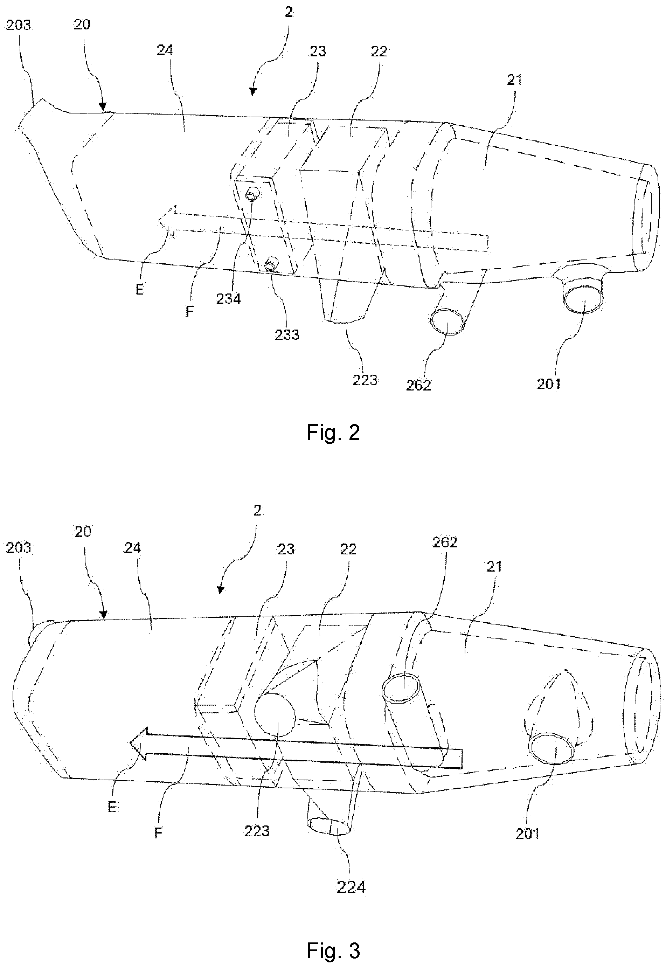

Selon l'invention, et comme illustré sur les figures 2 à 6b, le circuit d'alimentation et de distribution d'air comporte un module 2 d'alimentation en air qui comporte un boîtier 20 comportant un orifice d'entrée 201 et un orifice de sortie 203. Un flux d'air (représenté par la flèche F sur les figures) s'écoule entre l'orifice d'entrée 201 et l'orifice de sortie 203 selon une direction d'écoulement E, qui s'étend globalement selon l'axe longitudinal du boîtier 20.

De préférence, l'orifice d'entrée 201 est en communication fluidique avec une source d'air ambiant. De préférence encore, l'air ambiant arrivant à l'orifice d'entrée 201 du module 2 est mis sous pression par un compresseur (non illustré) qui prend l'air ambiant au niveau de la nacelle du système de propulsion. Optionnellement, un filtre (non représenté) peut être mis en œuvre en amont du compresseur pour filtrer les particules les plus grosses.

L'orifice de sortie 203 est quant à lui en communication fluidique avec la pile à combustible afin d'alimenter cette dernière en dioxygène pour obtenir la réaction d'oxydoréduction et ainsi créer de l'énergie électrique.

Le module 2 comporte en outre, logés dans le boîtier 20, entre l'orifice d'entrée 201 et l'orifice de sortie 203 :
- un premier filtre 21 comportant une première entrée 211 par laquelle le flux d'air F entre dans le premier filtre 21 et une première sortie 212 par laquelle le flux d'air F sort du premier filtre 21 ; et
- un premier échangeur thermique 22 comportant une deuxième entrée 221 par laquelle le flux d'air F entre dans le premier échangeur thermique 22 et une deuxième sortie 222 par laquelle le flux d'air F sort du premier échangeur thermique 22. Le premier échangeur thermique 22 est disposé en aval du premier filtre 21 par rapport à la direction d'écoulement E, c'est-à-dire ici entre le premier filtre 21 et l'orifice de sortie 203.

La première sortie 212 du premier filtre 21 et la deuxième entrée 221 du premier échangeur thermique 22 sont en communication fluidique directement l'une avec l'autre.

Lorsque le boîtier 20 ne comporte pas d'élément de traitement du flux d'air F autre que le premier filtre 21 et le premier échangeur thermique 22, la deuxième sortie 222 du premier échangeur thermique 22 et l'orifice de sortie 203 sont en communication fluidique directement l'une avec l'autre. Lorsque d'autres éléments de traitement du flux d'air F sont mis en œuvre dans le module 2 (comme décrit dans la suite de la description), la deuxième sortie du premier échangeur thermique 22 et l'orifice de sortie 203 sont en communication fluidique indirectement l'une avec l'autre. Dans ce cas, c'est la sortie de l'élément de traitement du flux d'air F situé le plus en aval (c'est-à-dire l'élément de traitement situé en dernier en amont de l'orifice de sortie 203 par rapport au sens d'écoulement du flux d'air F) qui est en communication fluidique directe avec l'orifice de sortie 203 du boîtier 20.

Dans cette description, lorsque l'on précise qu'une sortie et une entrée (ou plus généralement que deux éléments) sont en communication fluidique directement l'une avec l'autre, cela signifie que la sortie et l'entrée sont connectées directement l'une à l'autre, c'est-à-dire sans tuyau de raccordement connecté entre elles.

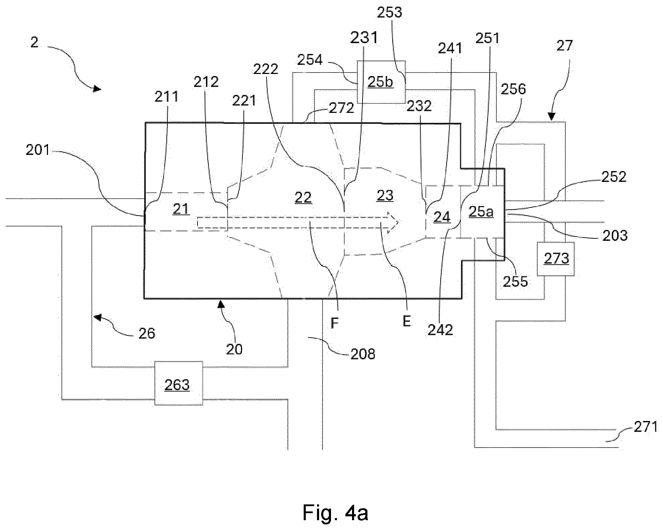

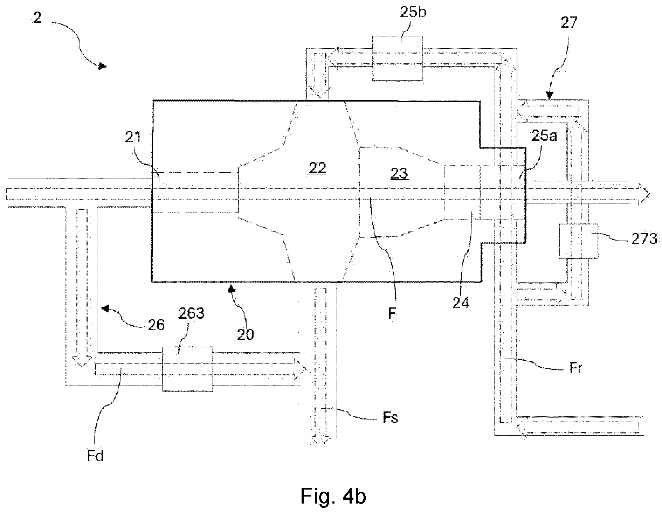

Plus précisément, selon le premier mode de réalisation illustré sur les figures 4a et 4b, le premier filtre 21 est ainsi accolé au premier échangeur 22 et la première sortie 212 du premier filtre 21 débouche donc directement dans la deuxième entrée 221 du premier échangeur thermique 22, sans élément intermédiaire de connexion. Dans une variante, un connecteur, par exemple du type mâle/femelle, est intégré entre la première sortie 212 et la deuxième entrée 221.

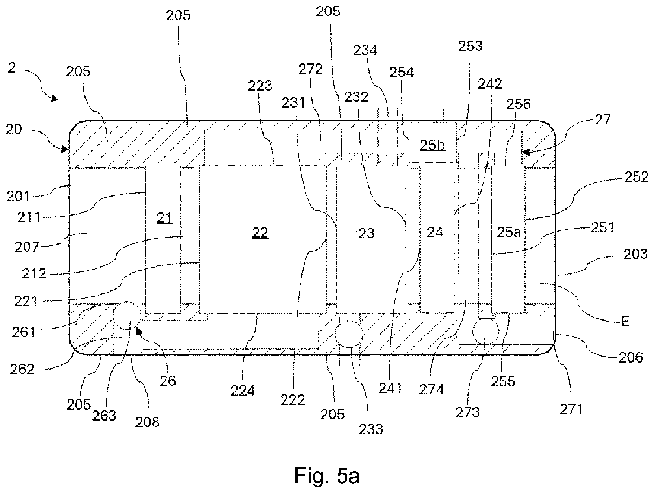

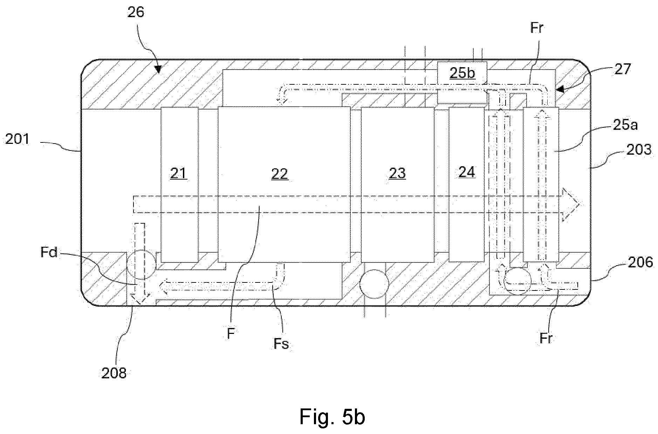

Selon un deuxième mode de réalisation, illustré sur les figures 5a à 6b, le premier filtre 21 et le premier échangeur thermique 22 sont en communication fluidique directement l'un à l'autre au moyen de parois internes 205 du boîtier 20 (comme décrit plus en détails par la suite). Ainsi, il est également possible de se passer de la mise en œuvre de tuyaux de raccordement pour connecter le premier filtre 21 et le premier échangeur thermique 22.

Dans tous les cas, le module 2 selon l'invention permet de s'affranchir de l'utilisation de tuyaux de raccordement entre le premier filtre 21 et le premier échangeur thermique 22.

De cette manière, et du fait de l'absence de tuyau de raccordement entre les éléments de traitement 21 et 22 du flux d'air F, le module 2 selon l'invention permet de diminuer le volume (et donc l'encombrement) du circuit d'alimentation et de distribution en air de la pile à combustible. L'intégration du module 2 au sein d'un système 100 de production d'énergie électrique est donc facilité.

De plus, il est possible de prévoir l'assemblage de l'ensemble des éléments de traitement du flux d'air mis en œuvre au sein du module 2 avant l'installation de ce dernier dans le système 100 de production d'énergie électrique. Ainsi, et du fait du faible encombrement du module 2, l'assemblage de ce dernier au système 100 de production d'énergie électrique est en outre facilité, d'autant plus lorsque le système 100 de production d'énergie électrique est mis en œuvre dans un aéronef puisque l'espace de travail pour les opérateurs est généralement limité au sein de l'aile 12 ou du fuselage 11 de l'aéronef 1.

Enfin, un tel module 2 permet en outre un gain significatif de poids, ce qui est relativement avantageux lorsque le module 2 doit être embarqué dans un aéronef 1.

Lorsque le premier échangeur thermique 21 est du type air/air, le premier échangeur thermique 21 assure donc le refroidissement ou le réchauffage du flux d'air F avec de l'air calorifique (qui peut donc être plus froid/chaud que le flux d'air F qui traverse longitudinalement le premier échangeur thermique 22). Cet air calorifique traverse globalement transversalement le premier échangeur thermique 22, c'est-à-dire selon une direction globalement perpendiculaire à la direction E du flux d'air F. Pour ce faire, le premier échangeur thermique 22 comporte une première entrée additionnelle 223 par laquelle l'air calorifique entre dans le premier échangeur thermique 22 et une première sortie additionnelle 224 par laquelle l'air calorifique sort du premier échangeur thermique 22. Comme décrit plus en détails par la suite, l'air calorifique entrant dans le premier échangeur thermique 22 peut provenir d'un flux de recirculation Fr.

La première sortie additionnelle 224 par laquelle l'air calorifique sort du premier échangeur thermique 22 forme ainsi une sortie d'évacuation de l'air calorifique après que l'échange thermique avec le flux d'air F a été effectué au sein du premier échangeur thermique 22. La première sortie additionnelle 224 du premier échangeur thermique 22 est en communication fluidique directement avec un orifice de sortie additionnelle 208 du boîtier 20 qui permet d'évacuer l'air hors du boîtier 20. De préférence, le flux d'air Fs issu de la première sortie additionnelle 224 du premier échangeur thermique 22 est évacué par l'orifice de sortie additionnelle 208 et peut être transporté vers une turbine du système 13 de propulsion de l'aéronef 1, par exemple. De cette manière, la consommation et l'utilisation de l'air au sein du module 2 sont optimisées.

Selon l'invention, et comme illustré sur les figures 2 à 6b, le module 2 comporte en outre, logés dans le boîtier 20 entre l'orifice d'entrée 201 et l'orifice de sortie 203 :
- un deuxième échangeur thermique 23 comportant une troisième entrée 231 par laquelle le flux d'air F entre dans le deuxième échangeur thermique 23 et une troisième sortie 232 par laquelle le flux d'air F sort du deuxième échangeur thermique 23, le deuxième échangeur thermique 23 étant disposé en aval du premier échangeur thermique 22 par rapport à la direction d'écoulement E ; et
- un deuxième filtre 24 comportant une quatrième entrée 241 par laquelle le flux d'air F entre dans le deuxième filtre 24 et une quatrième sortie 242 par laquelle le flux d'air F sort du deuxième filtre 24, le deuxième filtre 24 étant disposé en aval du deuxième échangeur thermique 23 par rapport à la direction d'écoulement E.

Plus précisément, la deuxième sortie 222 du premier échangeur thermique 22 et la troisième entrée 231 du deuxième échangeur thermique 23 sont en communication fluidique directement l'une avec l'autre. De la même manière la troisième sortie 232 du deuxième échangeur thermique 23 et la quatrième entrée 241 du deuxième filtre 24 sont en communication fluidique directement l'une avec l'autre.

Ainsi, les éléments de traitement 21 à 24 du flux d'air F sont disposés en série, les uns après les autres, sans tuyau de raccordement entre eux pour les connecter, de sorte à encore favoriser la réduction de l'encombrement du circuit d'alimentation et de distribution en air.

La communication fluidique directe entre les éléments de traitement 21 à 24 peut être obtenue par un raccordement direct selon le premier mode de réalisation décrit en relation avec les figures 4a et 4b ou au moyen des parois internes 205 du boîtier 20 selon le deuxième mode de réalisation décrit en relation avec les figures 5a à 6b.

De préférence, et comme illustré sur les figures 4a à 6b, le module 2 comporte en outre, logé dans le boîtier 20 entre l'orifice d'entrée 201 et l'orifice de sortie 203, un humidificateur 25a qui comporte une cinquième entrée 251 par laquelle le flux d'air F entre dans l'humidificateur 25a et une cinquième sortie 252 par laquelle le flux d'air F sort de l'humidificateur 25a. L'humidificateur 25a est disposé en aval du deuxième filtre 24 par rapport à la direction d'écoulement E, c'est-à-dire entre le deuxième filtre 24 et l'orifice de sortie 203.

La cinquième entrée 251 de l'humidificateur 25a et la quatrième sortie 242 du deuxième filtre 24 sont en communication fluidique directement l'une avec l'autre. De la même façon, la cinquième sortie 252 de l'humidificateur 25a et l'orifice de sortie 203 du module 2 sont en communication fluidique directement l'un avec l'autre. L'humidificateur 25 permet d'apporter l'humidité qui convient au flux d'air F avant que le flux d'air F n'entre dans la pile à combustible.

Ainsi, l'ensemble des éléments de traitement 21 à 25a du flux d'air F sont disposés en série, les uns après les autres, sans tuyau de raccordement entre eux pour les connecter, de sorte à encore favoriser la réduction de l'encombrement du circuit d'alimentation et de distribution en air. La communication fluidique direct entre les éléments de traitement 21 à 25a peut être obtenue par un raccordement direct selon le premier mode de réalisation des figures 4a et 4b ou au moyen des parois internes 205 du boîtier 20 selon le deuxième mode de réalisation des figures 5a à 6b. De préférence, et comme illustré sur les figures 4a à 6b, les éléments de traitement du flux d'air F, qui sont le premier filtre 21, le premier échangeur thermique 22, le deuxième échangeur thermique 23, le deuxième filtre 24 et l'humidificateur 25a, sont ici disposés les uns après les autres, globalement parallèlement le long d'un axe longitudinal du module 2 s'étendant globalement parallèlement au flux d'air F. Ainsi, le flux d'air F peut successivement traverser les éléments de traitement 21 à 25a sans que sa direction ne soit sensiblement modifiée transversalement. Cela permet de réduire l'encombrement du module 2 et également de diminuer la trainée du flux d'air F dans l'ensemble du module 2, optimisant ainsi son fonctionnement.

Les figures 5a à 6b illustrent le deuxième mode de réalisation. Comme précédemment décrit, le boîtier 20 du module 2 comporte des parois internes 205 qui forment un canal d'écoulement 207 du flux d'air F entre l'orifice d'entrée 201 et l'orifice de sortie 203. Plus précisément, les parois internes 205 relient fluidiquement au moins certains des éléments de traitement 21 à 25a du flux d'air F. Dans cet exemple, l'ensemble des éléments de traitement 21 à 25a sont reliés fluidiquement par des parois interne 205. En d'autres termes, l'ensemble des éléments sont en communication fluidique directement les uns aux autres grâce aux parois internes 205 du boîtier 20. De même, l'orifice d'entrée 201 et l'orifice de sortie 203 sont ici reliés fluidiquement respectivement au premier filtre 21 et à l'humidificateur 25a.

Les parois internes 205 peuvent donc permettre, au choix, de mettre en communication fluidique directe la première sortie 212 du premier filtre 21 à la deuxième entrée 221 du premier échangeur thermique 22, et/ou la deuxième sortie 222 du premier échangeur thermique 22 à la troisième entrée 231 du deuxième échangeur thermique 23, et/ou la troisième sortie 233 du deuxième échangeur thermique 23 à la quatrième entrée 241 du deuxième filtre 24, et/ou la quatrième sortie 242 du deuxième filtre 24 à la cinquième entrée 251 de l'humidificateur 25a.

De cette manière, les éléments de traitement 21 à 25a du flux d'air F peuvent être mis en communication fluidique sans nécessiter de mettre en œuvre des tuyaux de raccordement qui alourdiraient le module 2 et augmenteraient l'encombrement de ce dernier.

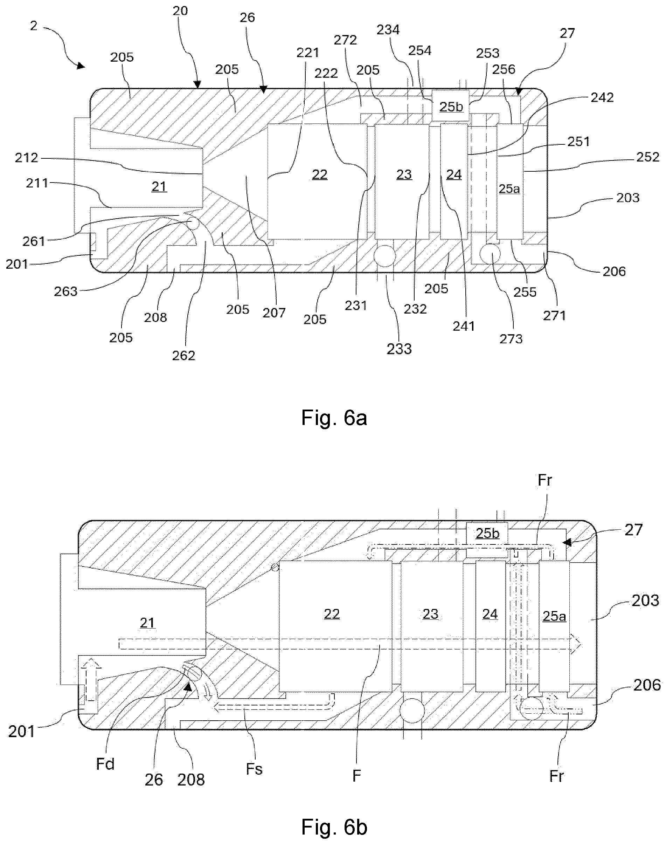

Dans les exemples illustrés sur les figures 4a à 6b, l'ensemble des éléments de traitements 21 à 25a sont disposés dans le boîtier 20 et sont en communication fluidique direct les uns avec les autres. Il serait envisageable, dans une variante, que l'humidificateur 25a puisse être disposé en sortie et hors du boîtier 20, et de préférence, en communication fluidique directement avec l'orifice de sortie 203.

De préférence, le module 2 comporte un circuit de dérivation 26 qui comporte une sixième entrée 261 par laquelle le flux de dérivation Fd entre dans le circuit de dérivation 26 et une sixième sortie 262 par laquelle le flux de dérivation Fd sort du circuit de dérivation 26. Le circuit de dérivation 26 est de préférence disposé entre l'orifice d'entrée 201 et un orifice de sortie additionnelle 208 du boîtier 20. Plus précisément, l'orifice d'entrée 203 du boîtier 20 et la sixième entrée 261 du circuit de dérivation 26 sont en communication fluidique directement l'un avec l'autre et la sixième sortie 262 du circuit de dérivation est en communication fluidique directement avec l'orifice de sortie additionnelle 208 du boîtier 20.

De cette manière, une partie du flux d'air entrant dans le boîtier 20 peut être dirigée directement vers l'orifice de sortie additionnelle 208 du boîtier 20 afin d'ajuster le débit et/ou la quantité d'air entrant dans les éléments de traitement 21 à 25a du flux d'air F.

Comme illustré sur les figures 4a à 6b, le circuit de dérivation 26 comporte en outre une valve 263 disposée entre la sixième entrée 261 et la sixième sortie 262. Cette valve permet sélectivement d'ouvrir et de fermer le circuit de dérivation 26.

Le circuit de dérivation 26 permet ainsi de faire sélectivement entrer une partie du flux d'air (devenant alors le flux de dérivation Fd) depuis l'orifice d'entrée 201 du boîtier 20 jusqu'à l'orifice de sortie additionnelle 208 du boîtier 20 et, lorsqu'il y est raccordé, d'alimenter en air la turbine du système 13 de propulsion de l'aéronef 1

De préférence, le module 2 comporte un circuit de recirculation 27 qui comporte une septième entrée 271 par laquelle un flux de recirculation Fr entre dans le circuit de recirculation 27 et une septième sortie 272 par laquelle le flux de recirculation Fr sort du circuit de recirculation 27. Le circuit de recirculation 27 est disposé entre un orifice d'entrée additionnel 206 du boîtier 20 destiné à être relié à une source d'air de recirculation et la première entrée additionnelle 223 du premier échangeur thermique 22. Plus précisément, la septième entrée 271 du circuit de recirculation 27 et l'orifice d'entrée additionnelle 206 du boîtier 20 sont en communication fluidique directement l'un avec l'autre. De même, la septième sortie 272 du circuit de recirculation 27 et la première entrée additionnelle 223 du premier échangeur thermique 22 sont en communication fluidique directement l'une avec l'autre.

L'orifice d'entrée d'air additionnel 206 est en communication fluidique avec une source d'air de recirculation qui est, dans cet exemple, de l'air provenant de la pile à combustible. Cet air de recirculation est ici obtenu après la réaction d'oxydoréduction de la pile à combustible.

Ainsi, le circuit de recirculation 27 permet de faire entrer de l'air calorifique au niveau de la première entrée additionnelle 223 du premier échangeur thermique 22. En particulier ici, l'air calorifique qui permet les échanges thermiques avec le flux d'air F au sein du premier échangeur thermique 22 provient de la pile à combustible. De cette manière, la consommation et l'utilisation de l'air au sein du module 2 et de la pile à combustible sont optimisées.

Le circuit de recirculation 27 permet donc d'alimenter en air calorifique le premier échangeur thermique 22.

On pourrait toutefois envisager que l'air calorifique utilisé par le premier échangeur thermique 22 provienne d'une autre source d'alimentation en air qui serait en communication fluidique avec l'orifice d'entrée additionnelle 206.

De préférence, le circuit de recirculation 27 comporte en outre un séparateur d'eau 25b comportant une huitième entrée 253 et une huitième sortie 254 du flux de recirculation Fr, le séparateur d'eau 25b étant disposé entre le premier échangeur thermique 22 et l'humidificateur 25a.

Ainsi, le circuit de recirculation 27 peut comporter un séparateur d'eau 25b qui permet de retirer l'eau du flux de recirculation Fr provenant ici de la pile à combustible avant que ce flux de recirculation soit utilisé comme air calorifique dans le premier échangeur thermique 22. Ainsi, le récupérateur d'eau 25b permet de récupérer l'humidité du flux de recirculation Fr afin de protéger de l'humidité l'échangeur de chaleur 22 traversé par le flux de recirculation Fr et la turbine du système 13 de propulsion de l'aéronef 1, lorsque l'orifice de sortie additionnelle 208 y est raccordé.

Plus précisément, l'orifice d'entrée additionnelle 206 du boîtier 20 et une deuxième entrée additionnelle 255 de l'humidificateur 25a sont en communication fluidique directement l'un avec l'autre et une deuxième sortie additionnelle 256 de l'humidificateur 25a et la huitième entrée 253 du séparateur d'eau 25b sont en communication fluidique directement l'une avec l'autre. De cette manière, le flux de recirculation Fr circule de l'orifice d'entrée additionnelle 206 au séparateur d'eau 25b en traversant l'humidificateur 25a. Ainsi, l'humidité du flux de recirculation Fr provenant de la pile à combustible est utilisée, en partie, pour apporter de l'eau à l'humidificateur 25b de sorte à humidifier le flux d'air F destiné à sortir du module 2 pour ensuite entrer dans la pile à combustible.

En outre, la huitième sortie 254 du séparateur d'eau 25b et la première entrée additionnelle 223 du premier échangeur thermique 22 sont en communication fluidique directement l'une avec l'autre pour alimenter ce dernier en air calorifique.

De préférence, le circuit de recirculation 27 comporte en outre un canal de contournement 274 disposé entre l'orifice d'entrée additionnelle 206 du boîtier 20 et la huitième entrée 253 du séparateur d'eau 25a, la huitième entrée 253 du séparateur d'eau 25b et l'orifice d'entrée additionnelle 206 étant en communication fluidique directement l'un avec l'autre via le canal de contournement 274. De cette manière, le flux de recirculation Fr peut circuler directement de l'orifice d'entrée additionnelle 206 au séparateur d'eau 25b, en contournant l'humidificateur 25a. Ainsi, seule la partie du flux de recirculation Fr nécessaire pour apporter de l'eau à l'humidificateur 25a traverse l'humidificateur 25a. L'autre partie du flux de recirculation Fr passe donc directement par le canal de contournement 274.

Le circuit de recirculation 27 peut également comporter une vanne de dérivation 273, disposée au niveau du canal de contournement 274, qui permet, en conséquence, de faire passer ou non l'air provenant de la pile à combustible à travers l'humidificateur 25a.

Selon le premier mode de réalisation illustré sur les figures 4a et 4b, le circuit de dérivation 26 et/ou le circuit de recirculation 27 est monté à l'extérieur du boîtier 20. Dans cet exemple, le circuit de dérivation 26 et le circuit de recirculation 27 sout tous les deux montés à l'extérieur du boîtier 20. Cela permet de fournir un boîtier 20 présentant une structure simple dans lequel sont logés les éléments de traitement 21 à 25.

Selon le deuxième mode de réalisation illustré sur les figures 5a à 6b, le circuit de dérivation 26 et/ou le circuit de recirculation 27 est formé par des parois internes 205 du boîtier 20. Dans cet exemple, le circuit de dérivation 26 et le circuit de recirculation 27 sout tous les deux intégrés au boîtier 20. En d'autres termes, ce sont les parois internes 205 du boîtier 20 qui définissent les circuits de dérivation 26 et de recirculation 27. Une telle mise en œuvre permet ainsi de limiter l'encombrement et le poids du module 2 d'alimentation en air.

De préférence, le premier filtre 21 et/ou le deuxième filtre 24 se présente sous la forme d'une cartouche amovible du boîtier 20. Ainsi, la maintenance des filtres, considérés comme des éléments dits « consommables », est facilitée. En effet, contrairement à l'état de la technique où il est nécessaire de démonter chaque filtre qui est relié au moyen de tuyaux de raccordement aux autres éléments de traitement du flux d'air F, l'invention prévoit un retrait et une installation des filtres simples et rapides, facilitant ainsi les opérations de maintenance. Une telle mise en œuvre est permise grâce au boîtier 20 qui intègre les filtres 21 et 24.

Selon les exemples illustrés, le premier filtre 21 combine un premier étage de filtrage mécanique et, optionnellement, en aval du premier étage de filtrage, un deuxième étage de filtrage d'ozone (également appelé convertisseur d'ozone). Le fait de disposer le deuxième étage de filtrage en aval du premier étage de filtrage permet de protéger le filtrage d'ozone des particules qui sont retenues par le filtrage mécanique. Le deuxième étage de filtrage pourrait être omis dans le cas où la pile à combustible accepterait de l'air contenant de l'ozone.

De plus, le premier échangeur thermique 22 est du type air/air, le deuxième échangeur thermique 23 est du type liquide/air et le deuxième filtre 24 est un filtre chimique adsorbant.

Une telle combinaison de filtres et d'échangeurs thermiques permet un traitement optimal de l'air qui alimente la pile à combustible, ce qui optimise ainsi les performances de la pile à combustible.

Comme illustré sur les figures 5a à 6b, lorsque le deuxième échangeur thermique 23 est du type air/liquide, il comporte une entrée de liquide réfrigérant 233 par laquelle le liquide réfrigérant entre dans le deuxième échangeur thermique 23 et une sortie de liquide réfrigérant 234 par laquelle le liquide réfrigérant sort du deuxième échangeur thermique 2. L'entrée 233 et la sortie 234 de liquide réfrigérant peuvent déboucher hors du boîtier 20 de sorte à permettre l'alimentation en liquide réfrigérant du deuxième échangeur thermique 23 et l'évacuation du liquide réfrigérant hors du deuxième échangeur thermique 23.

Bien que non illustré, on comprend bien évidemment que des vannes et/ou des capteurs peuvent être mis en œuvre au sein du boîtier 20 afin d'optimiser la gestion du flux d'air dans le module 2.

## Revendications

1. Module (2) d'alimentation en air pour un système (100) de production d'énergie électrique comportant une pile à combustible, ledit module (2) d'alimentation en air comportant :
- un boîtier (20) qui comporte un orifice d'entrée (201) et un orifice de sortie (203) et dans lequel s'écoule un flux d'air (F) entre ledit orifice d'entrée (201) et ledit orifice de sortie (203) selon une direction d'écoulement (E), et
- logés dans le boîtier (20), entre ledit orifice d'entrée (201) et ledit orifice de sortie (203), un premier filtre (21) comportant une première entrée (211) et une première sortie (212) dudit flux d'air (F) et un premier échangeur thermique (22) comportant une deuxième entrée (221) et une deuxième sortie (222) dudit flux d'air (F), ledit premier échangeur thermique (22) étant disposé en aval du premier filtre (21) par rapport à la direction d'écoulement (E),
et où ladite première sortie (212) dudit premier filtre (21) et ladite deuxième entrée (221) dudit premier échangeur thermique (22) sont en communication fluidique directement l'une avec l'autre, sans tuyau de raccordement connecté entre elles, **caractérisé en ce que** ledit module (2) comporte en outre logé dans le boîtier (20), entre ledit orifice d'entrée (201) et ledit orifice de sortie (203), un deuxième échangeur thermique (23) comportant une troisième entrée (231) et une troisième sortie (232) dudit flux d'air (F), ledit deuxième échangeur thermique (23) étant disposé en aval du premier échangeur thermique (22), et un deuxième filtre (24) comportant une quatrième entrée (241) et une quatrième sortie (242) dudit flux d'air (F), ledit deuxième filtre (24) étant disposé en aval du deuxième échangeur thermique (23),
où ladite deuxième sortie (222) dudit premier échangeur thermique (22) et ladite troisième entrée (231) dudit deuxième échangeur thermique (23) sont en communication fluidique directement l'une avec l'autre, sans tuyau de raccordement connecté entre elles, et où ladite troisième sortie (232) dudit deuxième échangeur thermique (23) et ladite quatrième entrée (241) dudit deuxième filtre (24) sont en communication fluidique directement l'une avec l'autre, sans tuyau de raccordement connecté entre elles.

2. Module (2) d'alimentation en air selon la revendication 1, **caractérisé en ce que** ledit module (2) comporte en outre, logé dans le boîtier (20), entre ledit orifice d'entrée (201) et ledit orifice de sortie (203), un humidificateur (25a) comportant une cinquième entrée (251) et une cinquième sortie (252) dudit flux d'air (F), ledit humidificateur (25a) étant disposé en aval du deuxième filtre (24),
où ladite cinquième entrée (251) dudit humidificateur (25a) et ladite quatrième sortie (242) dudit deuxième filtre (24) sont en communication fluidique directement l'une avec l'autre,
et où ladite cinquième sortie (252) dudit humidificateur (25a) et ledit orifice de sortie (203) dudit module (2) sont en communication fluidique directement l'un avec l'autre.

3. Module (2) d'alimentation en air selon l'une quelconque des revendications 1 ou 2, **caractérisé en ce que** ledit boîtier (20) comporte des parois internes (205) qui forment un canal d'écoulement (207) dudit flux d'air (F) entre ledit orifice d'entrée (201) et ledit orifice de sortie (203),
où lesdites parois internes (205) mettent en communication fluidique directe la première sortie (212) du premier filtre (21) à la deuxième entrée (221) du premier échangeur thermique (22), et/ou la deuxième sortie (222) du premier échangeur thermique (22) à la troisième entrée (231) du deuxième échangeur thermique (23), et/ou la troisième sortie (233) du deuxième échangeur thermique (23) à la quatrième entrée (241) du deuxième filtre (24), et/ou la quatrième sortie (242) du deuxième filtre (24) à la cinquième entrée (251) de l'humidificateur (25a).

4. Module (2) d'alimentation en air selon l'une quelconque des revendications 1 à 3, **caractérisé en ce qu'**il comporte un circuit de dérivation (26) comportant une sixième entrée (261) et une sixième sortie (262) d'un flux de dérivation (Fd), ledit circuit de dérivation (26) étant disposé entre ledit orifice d'entrée (201) et un orifice de sortie additionnelle (208) dudit boîtier (20) et où ledit orifice d'entrée (201) et ladite sixième entrée (261) sont en communication fluidique directement l'un avec l'autre et où ladite sixième sortie (262) et ledit orifice de sortie additionnelle (208) du boîtier (20) sont en communication fluidique directement l'un avec l'autre.

5. Module (2) d'alimentation en air selon l'une quelconque des revendications 2 à 4, **caractérisé en ce qu'**il comporte un circuit de recirculation (27) comportant une septième entrée (271) et une septième sortie (272) d'un flux de recirculation (Fr), ledit circuit de recirculation (27) étant disposé entre un orifice d'entrée d'air additionnelle (206) dudit boîtier (20) destiné à être relié à une source d'air de recirculation et une première entrée additionnelle (223) dudit premier échangeur thermique (22),
où ladite septième entrée (271) et ledit orifice d'entrée additionnelle (206) sont en communication fluidique directement l'un avec l'autre et où ladite septième sortie (272) et ladite première entrée additionnelle (223) dudit premier échangeur thermique (22) sont en communication fluidique directement l'une avec l'autre.

6. Module (2) d'alimentation en air selon la revendication 5 lorsqu'elle dépend de la revendication 2, **caractérisé en ce que** ledit circuit de recirculation (27) comporte en outre un séparateur d'eau (25b) comportant une huitième entrée (253) et une huitième sortie (254) dudit flux de recirculation (Fr), ledit séparateur d'eau (25b) étant disposé entre ledit premier échangeur thermique (22) et ledit humidificateur (25a) ;
où ledit orifice d'entrée additionnelle (206) et une deuxième entrée additionnelle (255) de l'humidificateur (25a) sont en communication fluidique directement l'un avec l'autre et où une deuxième sortie additionnelle (256) dudit humidificateur (25a) et ladite huitième entrée (253) dudit séparateur d'eau (25b) sont en communication fluidique directement l'une avec l'autre de sorte que ledit flux de recirculation (Fr) circule dudit orifice d'entrée additionnelle (206) audit séparateur d'eau (25b) en traversant ledit humidificateur (25a) ;
et où ladite huitième sortie (254) dudit séparateur d'eau (25b) et ladite première entrée additionnelle (223) dudit premier échangeur thermique (22) sont en communication fluidique directement l'une avec l'autre.

7. Module (2) d'alimentation en air selon la revendication 6, **caractérisé en ce que** ledit circuit de recirculation (27) comporte en outre un canal de contournement (274) disposé entre ledit orifice d'entrée additionnelle (206) dudit boîtier (20) et ladite huitième entrée (253) dudit séparateur d'eau (25a), ladite huitième entrée (253) dudit séparateur d'eau (25b) et ledit orifice d'entrée additionnelle (206) étant en communication fluidique directement l'un avec l'autre via ledit canal de contournement (274) de sorte que ledit flux de recirculation (Fr) circule dudit orifice d'entrée additionnelle (206) audit séparateur d'eau (25b) en contournant ledit humidificateur (25a).

8. Module (2) d'alimentation en air selon l'une quelconque des revendications 4 à 7, **caractérisé en ce que** ledit circuit de dérivation (26) et/ou ledit circuit de recirculation (27) est monté à l'extérieur dudit module (2).

9. Module (2) d'alimentation en air selon l'une quelconque des revendications 4 à 7, **caractérisé en ce que** ledit circuit de dérivation (26) et/ou ledit circuit de recirculation (27) est formé par des parois internes (205) dudit module (2).

10. Module (2) d'alimentation en air selon l'une quelconque des revendications 1 à 8, **caractérisé en ce que** ledit premier filtre (21) et/ou ledit deuxième filtre (24) se présente sous la forme d'une cartouche amovible dudit boîtier (20).

11. Module (2) d'alimentation en air selon l'une quelconque des revendications 1 à 10, où ledit premier filtre (21) comporte un premier étage de filtrage mécanique ou un premier étage de filtrage mécanique et un deuxième étage de filtrage d'ozone disposé en aval dudit premier étage de filtrage, où ledit premier échangeur thermique (22) est du type air/air, où ledit deuxième échangeur thermique (23) est du type liquide/air, et où ledit deuxième filtre (24) est un filtre chimique adsorbant.

12. Système (100) de production d'énergie électrique comportant au moins une pile à combustible et au moins un module (2) selon l'une des revendications 1 à 11, **caractérisé en ce que** ladite pile à combustible est alimentée en air depuis l'orifice de sortie (203) dudit au moins un module (2).

13. Système (13) de propulsion électrique d'un aéronef (1), **caractérisé en ce qu'**il est alimenté en électricité par au moins un système (2) de production d'énergie électrique selon la revendication 12.

14. Aéronef (1) comportant au moins un système (13) de propulsion électrique selon la revendication 13.

## Patentansprüche

1. Modul (2) zur Luftversorgung für ein Stromerzeugungssystem (100), das eine Brennstoffzelle umfasst, wobei das Modul (2) zur Luftversorgung Folgendes umfasst:
- ein Gehäuse (20), das eine Einlassöffnung (201) und eine Auslassöffnung (203) umfasst und in dem ein Luftstrom (F) zwischen der Einlassöffnung (201) und der Auslassöffnung (203) entlang einer Strömungsrichtung (E) strömt, und
- in dem Gehäuse (20) zwischen der Einlassöffnung (201) und der Auslassöffnung (203) untergebracht, einen ersten Filter (21), der einen ersten Einlass (211) und einen ersten Auslass (212) für den Luftstrom (F) umfasst, und einen ersten Wärmetauscher (22), der einen zweiten Einlass (221) und einen zweiten Auslass (222) für den Luftstroms (F) umfasst, wobei der erste Wärmetauscher (22) in Bezug auf die Strömungsrichtung (E) stromab des ersten Filters (21) angeordnet ist,
und wobei der erste Auslass (212) des ersten Filters (21) und der zweite Einlass (221) des ersten Wärmetauschers (22) direkt in Fluidverbindung miteinander stehen, ohne dass eine Verbindungsleitung zwischen ihnen angeschlossen ist, **dadurch gekennzeichnet, dass** das Modul (2) ferner, in dem Gehäuse (20) untergebracht, zwischen der Einlassöffnung (201) und der Auslassöffnung (203) einen zweiten Wärmetauscher (23) umfasst, der einen dritten Einlass (231) und einen dritten Auslass (232) für den Luftstrom (F) umfasst, wobei der zweite Wärmetauscher (23) stromab des ersten Wärmetauschers (22) angeordnet ist, und einen zweiten Filter (24), der einen vierten Einlass (241) und einen vierten Auslass (242) für den Luftstrom (F) umfasst, wobei der zweite Filter (24) stromab des zweiten Wärmetauschers (23) angeordnet ist,
wobei der zweite Auslass (222) des ersten Wärmetauschers (22) und der dritte Einlass (231) des zweiten Wärmetauschers (23) direkt in direkter Fluidverbindung miteinander stehen, ohne dass eine Verbindungsleitung zwischen ihnen angeschlossen ist, und wobei der dritte Auslass (232) des zweiten Wärmetauschers (23) und der vierte Einlass (241) des zweiten Filters (24) direkt in Fluidverbindung miteinander stehen, ohne dass eine Verbindungsleitung zwischen ihnen angeschlossen ist.

2. Modul (2) zur Luftversorgung nach Anspruch 1, **dadurch gekennzeichnet, dass** das Modul (2) ferner, in dem Gehäuse (20) zwischen der Einlassöffnung (201) und der Auslassöffnung (203) untergebracht, einen Befeuchter (25a) umfasst, der einen fünften Einlass (251) und einen fünften Auslass (252) für den Luftstrom (F) umfasst,
wobei der Befeuchter (25a) stromab des zweiten Filters (24) angeordnet ist,
wobei der fünfte Einlass (251) des Befeuchters (25a) und der vierte Auslass (242) des zweiten Filters (24) direkt in Fluidverbindung miteinander stehen,
und wobei der fünfte Auslass (252) des Befeuchters (25a) und die Auslassöffnung (203) des Moduls (2) direkt in Fluidverbindung miteinander stehen.

3. Modul (2) zur Luftversorgung nach einem der Ansprüche 1 oder 2, **dadurch gekennzeichnet, dass** das Gehäuse (20) Innenwände (205) umfasst, die einen Strömungskanal (207) für den Luftstrom (F) zwischen der Einlassöffnung (201) und der Auslassöffnung (203) bilden, wobei die Innenwände (205) den ersten Auslass (212) des ersten Filters (21) mit dem zweiten Einlass (221) des ersten Wärmetauschers (22) und/oder den zweiten Auslass (222) des ersten Wärmetauschers (22) mit dem dritten Einlass (231) des zweiten Wärmetauschers (23) und/oder den dritten Auslass (233) des zweiten Wärmetauschers (23) mit dem vierten Einlass (241) des zweiten Filters (24) und/oder den vierten Auslass (242) des zweiten Filters (24) mit dem fünften Einlass (251) des Befeuchters (25a) in direkte Fluidverbindung bringen.

4. Modul (2) zur Luftversorgung nach einem der Ansprüche 1 bis 3, **dadurch gekennzeichnet, dass** es einen Bypasskreis (26) umfasst, der einen sechsten Einlass (261) und einem sechsten Auslass (262) für einen Bypassstrom (Fd) umfasst, wobei der Bypasskreis (26) zwischen der Einlassöffnung (201) und einer zusätzlichen Auslassöffnung (208) des Gehäuses (20) angeordnet ist und wobei die Einlassöffnung (201) und der sechste Einlass (261) direkt in Fluidverbindung miteinander stehen und wobei der sechste Auslass (262) und die zusätzliche Auslassöffnung (208) des Gehäuses (20) direkt in Fluidverbindung miteinander stehen.

5. Modul (2) zur Luftversorgung nach einem der Ansprüche 2 bis 4, **dadurch gekennzeichnet, dass** es einen Rezirkulationskreis (27) umfasst, der einen siebten Einlass (271) und einen siebten Auslass (272) für einen Rezirkulationsstrom (Fr) umfasst, wobei der Rezirkulationskreis (27) zwischen einer zusätzlichen Lufteinlassöffnung (206) des Gehäuses (20), die dazu bestimmt ist, mit einer Rezirkulationsluftquelle verbunden zu werden, und einem ersten zusätzlichen Einlass (223) des ersten Wärmetauschers (22) angeordnet ist,
wobei der siebte Einlass (271) und die zusätzliche Einlassöffnung (206) direkt in Fluidverbindung miteinander stehen und wobei der siebte Auslass (272) und der erste zusätzliche Einlass (223) des ersten Wärmetauschers (22) direkt in Fluidverbindung miteinander stehen.

6. Modul (2) zur Luftversorgung nach Anspruch 5, wenn abhängig von Anspruch 2, **dadurch gekennzeichnet, dass** der Rezirkulationskreis (27) ferner einen Wasserabscheider (25b) umfasst, der einen achten Einlass (253) und einen achten Auslass (254) für den Rezirkulationsstrom (Fr) umfasst, wobei der Wasserabscheider (25b) zwischen dem ersten Wärmetauscher (22) und dem Befeuchter (25a) angeordnet ist;
wobei die zusätzliche Einlassöffnung (206) und ein zweiter zusätzlicher Einlass (255) des Befeuchters (25a) direkt in Fluidverbindung miteinander stehen und wobei ein zweiter zusätzlicher Auslass (256) des Befeuchters (25a) und der achte Einlass (253) des Wasserabscheiders (25b) direkt in Fluidverbindung miteinander stehen, so dass der Rezirkulationsstrom (Fr) von der zusätzlichen Einlassöffnung (206) zu dem Wasserabscheider (25b) durch den Befeuchter (25a) fließt;
und wobei der achte Auslass (254) des Wasserabscheiders (25b) und der erste zusätzliche Einlass (223) des ersten Wärmetauschers (22) direkt in Fluidverbindung miteinander stehen.

7. Modul (2) zur Luftversorgung nach Anspruch 6, **dadurch gekennzeichnet, dass** der Rezirkulationskreis (27) ferner einen Umgehungskanal (274) umfasst, der zwischen der zusätzlichen Einlassöffnung (206) des Gehäuses (20) und dem achten Einlass (253) des Wasserabscheiders (25a) angeordnet ist, wobei der achte Einlass (253) des Wasserabscheiders (25b) und die zusätzliche Einlassöffnung (206) über den Umgehungskanal (274) direkt in Fluidverbindung miteinander stehen, so dass der Rezirkulationsstrom (Fr) von der zusätzlichen Einlassöffnung (206) zu dem Wasserabscheider (25b) unter Umgehung des Befeuchters (25a) fließt.

8. Modul (2) zur Luftversorgung nach einem der Ansprüche 4 bis 7, **dadurch gekennzeichnet, dass** der Bypasskreis (26) und/oder der Rezirkulationskreis (27) außerhalb des Moduls (2) montiert ist.

9. Modul (2) zur Luftversorgung nach einem der Ansprüche 4 bis 7, **dadurch gekennzeichnet, dass** der Bypasskreis (26) und/oder der Rezirkulationskreis (27) durch Innenwände (205) des Moduls (2) gebildet wird.

10. Modul (2) zur Luftversorgung nach einem der Ansprüche 1 bis 8, **dadurch gekennzeichnet, dass** der erste Filter (21) und/oder der zweite Filter (24) in Form einer aus dem Gehäuse (20) entnehmbaren Kartusche vorliegt.

11. Modul (2) zur Luftversorgung nach einem der Ansprüche 1 bis 10, wobei der erste Filter (21) eine erste mechanische Filterstufe oder eine erste mechanische Filterstufe und eine zweite Ozonfilterstufe, die stromab der ersten Filterstufe angeordnet ist, umfasst, wobei der erste Wärmetauscher (22) vom Typ Luft/Luft ist, wobei der zweite Wärmetauscher (23) vom Typ Flüssigkeit/Luft ist und wobei der zweite Filter (24) ein adsorbierender chemischer Filter ist.

12. Stromerzeugungssystem (100), das mindestens eine Brennstoffzelle und mindestens ein Modul (2) nach einem der Ansprüche 1 bis 11 umfasst, **dadurch gekennzeichnet, dass** die Brennstoffzelle von der Auslassöffnung (203) des mindestens einen Moduls (2) aus mit Luft versorgt wird.

13. System (13) zum elektrischen Antrieb eines Luftfahrzeugs (1), **dadurch gekennzeichnet, dass** es durch mindestens ein Stromerzeugungssystem (2) nach Anspruch 12 mit Strom versorgt wird.

14. Luftfahrzeug (1), das mindestens ein System (13) zum elektrischen Antrieb nach Anspruch 13 umfasst.

## Claims

1. Air supply module (2) for a system (100) for producing electrical energy comprising a fuel cell, said air supply module (2) comprising:
- a housing (20) which has an inlet orifice (201) and an outlet orifice (203) and through which an air flow (F) flows along a direction of flow (E) between said inlet orifice (201) and said outlet orifice (203), and
- accommodated in the housing (20), between said inlet orifice (201) and said outlet orifice (203), a first filter (21) having a first inlet (211) and a first outlet (212) for said air flow (F) and a first heat exchanger (22) having a second inlet (221) and a second outlet (222) for said air flow (F), said first heat exchanger (22) being disposed downstream of the first filter (21) with respect to the direction of flow (E),
and wherein said first outlet (212) of said first filter (21) and said second inlet (221) of said first heat exchanger (22) are in direct fluidic communication with one another, without a connecting hose being connected in between, **characterized in that** said module (2) also comprises, accommodated in the housing (20), between said inlet orifice (201) and said outlet orifice (203), a second heat exchanger (23) having a third inlet (231) and a third outlet (232) for said air flow (F), said second heat exchanger (23) being disposed downstream of the first heat exchanger (22), and a second filter (24) having a fourth inlet (241) and a fourth outlet (242) for said air flow (F), said second filter (24) being disposed downstream of the second heat exchanger (23),
wherein said second outlet (222) of said first heat exchanger (22) and said third inlet (231) of said second heat exchanger (23) are in direct fluidic communication with one another, without a connecting hose being connected in between, and wherein said third outlet (232) of said second heat exchanger (23) and said fourth inlet (241) of said second filter (24) are in direct fluidic communication with one another, without a connecting hose being connected in between.

2. Air supply module (2) according to Claim 1, **characterized in that** said module (2) also comprises, accommodated in the housing (20), between said inlet orifice (201) and said outlet orifice (203), a humidifier (25a) having a fifth inlet (251) and a fifth outlet (252) for said air flow (F), said humidifier (25a) being disposed downstream of the second filter (24),
wherein said fifth inlet (251) of said humidifier (25a) and said fourth outlet (242) of said second filter (24) are in direct fluidic communication with one another,
and wherein said fifth outlet (252) of said humidifier (25a) and said outlet orifice (203) of said module (2) are in direct fluidic communication with one another.

3. Air supply module (2) according to either one of Claims 1 and 2, **characterized in that** said housing (20) has internal walls (205) that form a flow channel (207) for said air flow (F) between said inlet orifice (201) and said outlet orifice (203),
wherein said internal walls (205) place the first outlet (212) of the first filter (21) in direct fluidic communication with the second inlet (221) of the first heat exchanger (22), and/or the second outlet (222) of the first heat exchanger (22) in direct fluidic communication with the third inlet (231) of the second heat exchanger (23), and/or the third outlet (233) of the second heat exchanger (23) in direct fluidic communication with the fourth inlet (241) of the second filter (24), and/or the fourth outlet (242) of the second filter (24) in direct fluidic communication with the fifth inlet (251) of the humidifier (25a).

4. Air supply module (2) according to any one of Claims 1 to 3, **characterized in that** it comprises a bypass circuit (26) having a sixth inlet (261) and a sixth outlet (262) for a bypass flow (Fd), said bypass circuit (26) being disposed between said inlet orifice (201) and an additional outlet orifice (208) of said housing (20), and wherein said inlet orifice (201) and said sixth inlet (261) are in direct fluidic communication with one another, and wherein said sixth outlet (262) and said additional outlet orifice (208) of the housing (20) are in direct fluidic communication with one another.

5. Air supply module (2) according to any one of Claims 2 to 4, **characterized in that** it comprises a recirculation circuit (27) having a seventh inlet (271) and a seventh outlet (272) for a recirculation flow (Fr), said recirculation circuit (27) being disposed between an additional air inlet orifice (206) of said housing (20) that is intended to be connected to a source of recirculation air and a first additional inlet (223) of said first heat exchanger (22),
wherein said seventh inlet (271) and said additional inlet orifice (206) are in direct fluidic communication with one another, and wherein said seventh outlet (272) and said first additional inlet (223) of said first heat exchanger (22) are in direct fluidic communication with one another.

6. Air supply module (2) according to Claim 5 when it is dependent on Claim 2, **characterized in that** said recirculation circuit (27) also has a water separator (25b) having an eighth inlet (253) and an eighth outlet (254) for said recirculation flow (Fr), said water separator (25b) being disposed between said first heat exchanger (22) and said humidifier (25a);
wherein said additional inlet orifice (206) and a second additional inlet (255) of the humidifier (25a) are in direct fluidic communication with one another, and wherein a second additional outlet (256) of said humidifier (25a) and said eighth inlet (253) of said water separator (25b) are in direct fluidic communication with one another such that said recirculation flow (Fr) flows from said additional inlet orifice (206) to said water separator (25b), passing through said humidifier (25a);
and wherein said eighth outlet (254) of said water separator (25b) and said first additional inlet (223) of said first heat exchanger (22) are in direct fluidic communication with one another.

7. Air supply module (2) according to Claim 6, **characterized in that** said recirculation circuit (27) also has a bypass channel (274) disposed between said additional inlet orifice (206) of said housing (20) and said eighth inlet (253) of said water separator (25a), said eighth inlet (253) of said water separator (25b) and said additional inlet orifice (206) being in direct fluidic communication with one another via said bypass channel (274) such that said recirculation flow (Fr) flows from said additional inlet orifice (206) to said water separator (25b), bypassing said humidifier (25a).

8. Air supply module (2) according to any one of Claims 4 to 7, **characterized in that** said bypass circuit (26) and/or said recirculation circuit (27) is/are mounted on the outside of said module (2).

9. Air supply module (2) according to any one of Claims 4 to 7, **characterized in that** said bypass circuit (26) and/or said recirculation circuit (27) is/are formed by internal walls (205) of said module (2).

10. Air supply module (2) according to any one of Claims 1 to 8, **characterized in that** said first filter (21) and/or said second filter (24) is/are in the form of a cartridge that is removable from said housing (20).

11. Air supply module (2) according to any one of Claims 1 to 10, wherein said first filter (21) has a first mechanical filter stage or a first mechanical filter stage and a second ozone filter stage disposed downstream of said first filter stage, wherein said first heat exchanger (22) is of the air/air type, wherein said second heat exchanger (23) is of the liquid/air type, and wherein said second filter (24) is an adsorbent chemical filter.

12. System (100) for producing electrical energy, comprising at least one fuel cell and at least one module (2) according to one of Claims 1 to 11, **characterized in that** said fuel cell is supplied with air from the outlet orifice (203) of said at least one module (2).

13. Electrical propulsion system (13) of an aircraft (1), **characterized in that** it is supplied with electricity by at least one system (2) for producing electrical energy according to Claim 12.

14. Aircraft (1) comprising at least one electrical propulsion system (13) according to Claim 13.
